(19) **Europäisches Patentamt**

**European Patent Office**

**Office européen des brevets**

(11) **EP 1 031 590 B1**

(12) **EUROPÄISCHE PATENTSCHRIFT**

(45) Veröffentlichungstag und Bekanntmachung des Hinweises auf die Patenterteilung:
**01.09.2004 Patentblatt 2004/36**

(51) Int Cl.⁷: **C08G 63/82**, B01J 35/10, B01J 37/02

(21) Anmeldenummer: **00100969.5**

(22) Anmeldetag: **19.01.2000**

(54) **Katalysator zur Darstellung von Polyestern, seine Herstellung und Verwendung**

Catalyst for making polyesters, its preparation and use

Catalyseur pour fabriquer des polyesters, sa préparation et son utilisation

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **27.02.1999 DE 19908628**

(43) Veröffentlichungstag der Anmeldung:
**30.08.2000 Patentblatt 2000/35**

(73) Patentinhaber: **Zimmer Aktiengesellschaft**
**60388 Frankfurt am Main (DE)**

(72) Erfinder:
• **Otto, Brigitta, Dr.**
**14715 Milow (DE)**
• **Thiele, Ulrich, Dr.**
**63486 Bruchköbel (DE)**
• **Guo, Xiaogang, Dr.**
**60594 Frankfurt am Main (DE)**

(74) Vertreter: **Grünecker, Kinkeldey,**
**Stockmair & Schwanhäusser Anwaltssozietät**
**Maximilianstrasse 58**
**80538 München (DE)**

(56) Entgegenhaltungen:
**EP-A- 0 831 109**     **BE-A- 878 249**
**FR-A- 2 332 806**     **GB-A- 2 333 525**
**US-A- 3 817 931**     **US-A- 5 744 572**

• **DATABASE CHEMABS [Online] CHEMICAL ABSTRACTS SERVICE, COLUMBUS, OHIO, US; retrieved from STN Database accession no. 114:103025/DN, HCAPLUS XP002167405 & CN 1 043 942 A (INSTITUTE OF CHEMICAL INDUSTRY, JINAN CITY) 18. Juli 1990 (1990-07-18)**
• **DATABASE CHEMABS [Online] CHEMICAL ABSTRACTS SERVICE, COLUMBUS, OHIO, US; retrieved from STN Database accession no. 90:72649/DN, HCAPLUS XP002167406 & RO 61 870 B (INTREPRINDEREA DE FIBRE SINTETICE, IASI) 15. Mai 1977 (1977-05-15)**

Bemerkungen:
Die Akte enthält technische Angaben, die nach dem Eingang der Anmeldung eingereicht wurden und die nicht in dieser Patentschrift enthalten sind.

EP 1 031 590 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft einen Katalysator, ein Verfahren zu dessen Herstellung und die Verwendung des Katalysators zur Herstellung linearer Polyester durch Umesterung oder Veresterung und Polykondensation mehrwertiger Alkohole mit mehrwertigen Carbonsäuren.

Die Herstellung von Polyestern erfolgt im allgemeinen in der Weise, daß ein Diol mit einer Dicarbonsäure oder einem niederen Dicarbonsäureester, z. B. Dimethylester, zum entsprechenden Dicarbonsäureester umgesetzt wird, der bei ansteigenden Temperaturen unter vermindertem Druck ein- und mehrstufig polykondensiert wird. Für die Veresterung und/oder die Umesterung und Polykondensation werden je nach Wahl der Diole bzw. Dicarbonsäuren verschiedene Katalysatoren eingesetzt.

Die Katalyse der Herstellung, vor allem die Polykondensationsreaktion zum Aufbau der Polymerkette linearer Polyester nach dem chemischen Prinzip der Polyveresterung und der Polyumesterung erfolgt durch die Zugabe von Metallen, die in der Lage sind, mit den funktionellen Gruppen, besonders mit den Hydroxylendgruppen Übergangskomplexe zu bilden, wobei für die Polykondensation bevorzugt Metallionen mit drei und mehr freien Valenzen, wie $Sb^{3+}$, $Pb^{4+}$, $Ti^{4+}$, $Bi^{3+}$, $As^{3+}$, $Si^{4+}$, $Sn^{4+}$, $Al^{3+}$ und $Ge^{4+}$ wirkungsvolle Katalysatoren darstellen. In der industriellen Praxis haben sich für die Polykondensation von Polyethylenterephthalat (PET) bevorzugt $Sb^{3+}$ und $Ge^{4+}$ bewährt, wobei Metallkonzentrationen von 150 bis 300 ppm Sb und 20 bis 120 ppm Ge in Abhängigkeit von der Art des Polykondensationsreaktors effektiv sind; $Ti^{4+}$ in Form, beispielsweise seiner Tetraalkoxide hat sich wegen seiner generell höheren Reaktivität und wegen der höheren Hydrophilie für die Herstellung von Polybutylenterephthalat (PBT) und Polytrimethylenterephthalat (PTT) sowie deren Copolyester als Katalysator bewährt. Für die Herstellung von PET hat es vor allem wegen der möglichen umweltschädigenden Einflüsse des Sb als Schwermetall nicht an Versuchen gefehlt, Ti als Katalysator zu verwenden.

Vor allem der Einsatz komplexbildender Liganden, wie Weinsäure oder Zitronensäure gemäß DD 286 174 und WO 97/47675 oder die Bildung komplexer $TiO_2$-$SiO_2$-Verbindungen nach US-A-5 789 528 oder der Einsatz alkalimodifizierter Titanoxide gemäß EP-A-0 826 713, EP-A-0 827 518 und EP-A-0 799 268 oder Mischkatalysatoren aus Ti mit anderen Metallen, wie dies in US-A-5 340 907, DE-A-196 27 591 und EP-A-0 745 630 beschrieben ist, sollen einerseits die hohe Hydrolyseempfindlichkeit der Titanalkoxide reduzieren und die damit in Verbindung stehende Präzipitationsneigung unterbinden und andererseits die z. B. durch Titan hervorgerufene Bildung farbiger Komplexverbindungen reduzieren. In vielen dieser Schutzrechte wird ein Konzentrationsbereich von 5 bis 100 ppm Ti, bevorzugt 5 bis 30 ppm Ti, angegeben.

In nachfolgender Tabelle ist eine Zusammenstellung einer Reihe von Schutzrechten angegeben, die Ti in Verbindung mit verschiedensten Zusätzen als Katalysatoren beanspruchen, wobei die Gehaltsbereiche und die nachgearbeiteten Ausführungsbeispiele einander gegenübergestellt sind.

| Schutzrecht -Nr. | Ti-Verbindung | Ti-Konzentr. im Anspruch | Ti-Konzentr. im Beispiel | Modifikator |
|---|---|---|---|---|
| EP 0 826 713 A1 v. 29.8.97 (US 706 950 A1 US 910 754 A1) | Tetrabutytitanat oder Tetratitanat | 5 - 30 ppm | 15; 30 ppm | Ultranox® 626; 627 A |
| US 5 789 528 v. 13.3.97 | $TiO_2$/$SiO_2$ > 90:10 | 5 - 500 ppm/ 10 - 100 ppm (bezogen auf die Oxide) | 95:5 / 100 ppm | Carbethoxymethyl-iethylphosphonat, Di (polyoxyethylen) hydroxymethylphosphonat u.a. |
| EP 827 518 A 1 v. 23.5.95 | Titantetrabutylat | 0,005-0,05 mmol/ mol PTA (2,5-7,5 ppm Ti)≤ 12 ppm wirksame Substanz Ti+P+Co | 5 ppm | Trisnonylphenylphosphit, Phosphorsäure, Bi(2,4di-tert-butylphenyl) entaerytritdiphosphit, Phosphorsäure, Triphenylphosphat |

(fortgesetzt)

| Schutzrecht -Nr. | Ti-Verbindung | Ti-Konzentr. im Anspruch | Ti-Konzentr. im Beispiel | Modifikator |
|---|---|---|---|---|
| DE196 27 591A 1 v. 9.7.96 | Ti(IV)-Verbindung als Co-Katalysator für Zeolith (als Synergist) | 500-10000 ppm Zeolith + Ti (Konzentration nicht beansprucht) | 3,3-59 ppm Ti + 5000 ppm Zeolith | Triethylphosphat |
| EP 0 799 268A1 v. 6.12.95 | S aus Benzensulfonsäure + Ti aus Titetraisopropylat | Schwefel 5-60 ppm + Ti 1-6 ppm | Ti + S: 4+32 ppm 6+48 ppm 6+0 ppm 80 Sb+2+16 ppm | Sulfonsäure/ Benzylsulfonsäure |
| US 5 340 907A1 v. 15.12.95 | Mischkatalysatoren aus Zn+Ti+ggf.Mn | 0,75 ppm Mn 25-100 ppm Zn 0,5-15 ppm Ti | 1 ppm Ti (+100 ppm Zn + 30 ppm Co) | P als Inhibitor |
| EP 0745 640 A1 v. 8.10.97 | Mischkatalysatoren aus Sb, Ge und Ti | Metall 5-130 ppm, davon Ti 0-20 ppm | 4 ppm Ti (+ 81 ppm Sb) | |

Der Grund für die in der Praxis notwendigen Ti-Konzentrationen von > 20 ppm ist vor allem darin zu sehen, daß im industriellen Prozeß der Polykondensation immer ein Teil des zugesetzten Katalysatormetalls vor allem durch Wasserspuren zu katalytisch unwirksamem $TiO_2$ umgewandelt wird. Diese Ausfällungen führen zu erhöhter Trübung und/oder schaligen Ablagerungen in den hergestellten Polyestern. Darüber hinaus steht der Teil des Katalysatormetalls, das zu $TiC_2$ umgewandelt wurde, der Polykondensation nicht mehr zur Verfügung. Außerdem verursacht Titan bei hohen Konzentrationen immer eine Gelbfärbung des Polyesters, die trotz Inhibierung und Zugabe hoher Farbstoffkonzentrationen nicht vermieden werden kann, so daß insgesamt ein weniger brillanter und thermisch instabiler Polyester hergestellt wird. Auch bei Sb ist in Gegenwart von Wasser die Bildung von Antimonoxidhydraten oder in Gegenwart von Phosphorsäure, z. B. die Bildung von Antimonphosphaten bekannt. Die Reduktion des Sb zu katalytisch inaktivem Antimonmetall läßt eine Graufärbung des Polyesters entstehen.

Es ist deshalb die Aufgabe der vorliegenden Erfindung, einen Katalysator, ein Verfahren zu dessen Herstellung und die Verwendung des Katalysators zur Herstellung linearer Polyester, insbesondere für die Produktion von Flaschen, Folien und sonstigen Lebensmittelverpackungen, sowie für Filamente, Fasern und Formkörper bereitzustellen, der einen möglichst niedrigen Gehalt an katalytisch wirksamer Metallverbindung aufweist.

Die Lösung dieser Aufgabe erfolgt durch einen Katalysator, dessen die heterogene Phase bildende Trägersubstanz aus feinstkörnigen Teilchen poröser Struktur und großer innerer, reaktive und/oder koordinative Zentren aufweisender Oberfläche besteht und in deren Poren katalytisch wirksame Metallverbindung adsorbiert sind und wobei die nach der BET-Methode bestimmte spezifische Oberfläche des die Trägersubstanz bildenden Teilchen $\geq 50$ $m^2$/g beträgt. Auf diese Weise liegt katalytisch wirksame Metallverbindung zunächst geschützt im Reaktionsmedium vor und diffundiert im Verlauf der Reaktion sukzessive zum Reaktionsort und reagiert zielgerichtet.

Eine vorzugsweise Ausgestaltung des erfindungsgemäßen Katalysators ist darin zu sehen, daß die die Trägersubstanz bildenden Teilchen, vorzugsweise aus wenigstens einer Substanz, ausgewählt aus Aktivkohle, Diatomeenerde, Zeolithen, synthetischen und natürlichen Silikaten, Siliciumoxiden, Siliciumoxidhydraten, Fullerenen, vernetzten Polymeren und dergleichen besteht, wobei das Wirkprinzip nicht auf die genannten Substanzen beschränkt ist.

Im Rahmen der Ausgestaltung der Erfindung besitzen die Teilchen der Trägersubstanz eine mittlere Korngröße $d_{50}$ von 0,05 bis 2 μm, bevorzugt 0,1 bis 1 μm, insbesondere 0,2 bis 0,5 μm. Im Reaktionsmedium existieren diese Teilchen ohne wesentliche Agglomeration.

Die nach der BET-Methode bestimmte spezifische Oberfläche der die Trägersubstanz bildenden Teilchen beträgt vorzugsweise > 500 $m^2$/g.

Als katalytisch wirksame Komponenten kommen insbesondere Metallverbindungen des Ti, Sb, Ge, Sn und Al, die das Metall in Form seiner Ionen $Ti^{4+}$, $Sb^{3+}$, $Ge^{4+}$, $Sn^{4+}$ oder $Al^{3+}$ bei der Reaktion mit den OH- bzw. COOH-Endgruppen der Polyesterreaktionsmasse zur Verfügung stellen, in Betracht.

Nach einem besonderen Merkmal der Erfindung beträgt das Massenverhältnis von Trägersubstanz zum Metall der katalytisch wirksamen Metallverbindung 1:50 bis 50:2, vorzugsweise 1:2 bis 20:1.

Die Herstellung des Katalysators erfolgt erfindungsgemäß in der Weise, daß die Trägersubstanz und die katalytisch wirksame Metallverbindung in wasserfreier Flüssigkeit, vorzugsweise in dem für die Herstellung des Polyesters ausgewählten mehrwertigen Alkohol zum Zwecke ihrer Reaktion homogen suspendiert werden. Dabei kann es vorteilhaft sein, daß die Reaktion bei erhöhter Temperatur durchgeführt wird.

Für die Reinheit des Katalysators kann es angebracht sein, nach dem Erkalten der Reaktionssuspension die Flüssigkeit mit den gegebenenfalls nicht umgesetzten Anteilen an katalytisch wirksamer Metallverbindung mechanisch, beispielsweise mittels Zentrifuge oder durch Filtration, zu trennen und den Rückstand, falls erforderlich, zu waschen. Der Einfachheit halber kann der hergestellte Katalysator als Suspension in dem für den entsprechenden Polyesterprozeß ausgewählten mehrwertigen Alkohol, insbesondere Diol, aufbewahrt und für den Prozeß eingesetzt werden.

Die Feinstzerkleinerung der Trägersubstanz erfolgt zweckmäßigerweise durch Mahlen, z. B. in Strahlmühlen, oder durch Mahlen der die Trägersubstanz enthaltenden Suspension, beispielsweise nach dem Perlmühlenprinzip.

In besonderen Fällen kann es erforderlich sein, daß die Suspension nach Abschluß der Reaktion zwischen Trägersubstanz und Metallverbindung gemahlen wird, um eine für die Anwendung geeignete Kornverteilung zu erhalten.

Bei der Herstellung von linearen Polyestern unter Verwendung des erfindungsgemäß aufgebauten Katalysators beträgt die für die Polykondensation und Umesterung erforderliche Katalysatormenge, bezogen auf seinen Metallgehalt mit Bezug auf PET, 0,1 bis 100 ppm.

Bei der Herstellung von linearen Polyestern oder Copolyestern durch Umesterung von mindestens einem Dicarbonsäuredialkylester oder durch Veresterung von mindestens einer Dicarbonsäure mit mindestens einem Diol und nachfolgender ein- oder mehrstufiger Polykondensation erfolgt der Zusatz der den Katalysator enthaltenden Suspension während des Zeitraums vor Beginn der Veresterung bis kurz vor Ende der Polykondensation.

Bei der Umesterung wird die Zugabe des Katalysators erst nach der Blockierung der Umesterungskatalysatoren vorgenommen, da die katalytische Aktivität der von den Teilchen der Trägersubstanz absorbierten katalytisch wirksamen Metallverbindung für die Polykondensation, durch die üblicherweise hierfür verwendeten Phosphorverbindungen stark eingeschränkt werden kann.

Eine weitere Ausgestaltung des erfindungsgemäßen Verfahrens besteht darin, daß der Zeitpunkt für die Zugabe eines Stabilisators, wie Phosphorsäure, phosphorige Säure, Phosphonsäure, Carboxyphosphonsäure und deren Verbindung, in einer Menge von 1 bis 50 ppm, vorzugsweise 1 bis 10 ppm, bezogen auf die Polyestermasse, vom Zeitpunkt der Zugabe des Katalysators verschieden ist und von diesem, bezogen auf den Verlauf der Polyesterherstellung, zeitlich möglichst entfernt liegt. So wird beispielsweise dem monomeren Gemisch im Veresterungsverfahren der Katalysator zu Beginn und der phosphorhaltige Stabilisator frühestens nach vollendeter Einspeisung des gesamten monomeren Gemisches, entsprechend einem Veresterungsgrad von 60 bis 98 %, zugegeben. Bei einer nichtkatalysierten Veresterung kann zu Beginn der Veresterung der phosphorhaltige Stabilisator und am Ende der Veresterung der Katalysator zugegeben werden.

Unter Polyester sind Polymere aus Terephthalsäure oder 2,6-Naphthalindicarbonsäure und Ethylenglykol, 1,3-Propandiol, 1,4-Butandiol und/oder 1,4-Cyclohexandimethanol und deren Copolymere mit anderen Dicarbonsäuren, wie beispielsweise Isophthalsäure, Terephthalsäure, 1,4-Cyclohexandicarbonsäure, 1,6-Naphthalindicarbonsäure, p-Hydroxybenzoesäure, 4,4-Bisphenyldicarbonsäure, Adipinsäure, Phthalsäure, Alkandicarbonsäuren und/oder Diolen, wie Diethylenglykol, 1,4-Butandiol, 1,4-Cyclohexandimethanol, Polyglykole mit einem Molekulargewicht unter 1000, zu verstehen. Bevorzugter Polyester ist Polyethylenterephthalat, das 0,5 bis 5,0 Ma-% Diethylenglykol und 0 bis 5,0 Ma-% Isophthalsäure, 2,6-Naphthalindicarbonsäure, p-Hydroxybenzoesäure und/oder 1,4-Cyclohexandimethanol als Comonomere enthält. Ebenfalls geeignet sind diese Art der Katalysatoren für die Polykondensation von Hydroxycarbonsäuren wie z. B. Milchsäure oder Glykolsäure.

Falls für den herzustellenden Polyester gewünscht, kann dem Reaktionsgemisch ein schwermetallfreier Blautöner, wie organische, blaue oder blau-rötliche Farbstoffe, besonders lebensmittelzugelassene Farbstoffe wie Estofil Blau SRB-L und Estofil Rot SGF-T, hergestellt von der Firma Clariant, in Mengen vom bis zu 3 ppm zugesetzt werden.

Auch die Zugabe von polyfunktionellen Alkoholen, wie Tri- oder Tetrahydroxyalkane, polyfunktionellen Carbonsäuren und Phosphonsäureverbindungen, wie z. B. in der US-A-5 744 572 und der US-A-5 756 033 beschrieben, in Konzentrationen bis zu 300 ppm, bezogen auf die Polyestermasse, ist vorteilhaft. Die Konzentration des Katalysators läßt sich dabei noch weiter reduzieren, wobei insbesondere die Reaktion der Festphasenkondensation zusätzlich unterstützt wird.

Die Erfindung wird nachfolgend anhand einiger, in keiner Weise einschränkender Ausführungsbeispiele näher beschrieben. Die angegebenen Eigenschaftswerte wurden hierbei wie folgt ermittelt:

Die Intrinsic-Viskosität (I.V.) wurde bei 25°C an einer Lösung von 500 mg Polyester in 100 ml eines Gemisches aus Phenol und 1,2-Dichlorbenzol (3:2 Gew.-Teile) gemessen.

Die CCOH-Endgruppenkonzentration wurde mittels photometrischer Titration mit 0,05 n ethanolischer Kalilauge gegen Bromthymolblau einer Lösung eines Polyesters in einem Gemisch aus o-Kresol und Chloroform (70:30 Gew.-Teile) bestimmt.

Die Bestimmung von Diethylenglokol (DEG), Isophthalsäure (IPA) und 1,4-Cyclohexyndimethanol (CHDM) im Polyester erfolgt mittels Gaschromatographie nach vorangegangener Methanolyse von 1 g Polyester in 30 ml Methanol unter Zusatz von 50 mg/l Zinkacetat im Bombenrohr bei 200°C.

Freies Glykol (EG) wurde durch Umsetzung mit Perjodsäure zu Formaldehyd, Reduktion der überschüssigen Perjodsäure mit Kaliumjodid und Titration des frei werdenden Jods ermittelt.

Die Verseifungszahl wurde durch Verseifung mit Kaliumhydroxid in n-Propanol und potentiometrische Titration in Dimethylformamid bestimmt. Der Veresterungsgrad (U) wurde aus der Verseifungszahl (Vz) und der Säurezahl (Sz) des Reaktionsgemisches gemäß U = (Vz-Sz) 100/Vz berechnet.

Die Messung des Trübungswertes in nephelometrischen Trübungseinheiten 2 (NTU) erfolgte an einer 10 Ma-%-igen Lösung von Polyester in Phenol / 1,2-Dichlorbenzol (3:2 Gew.-Teile) mit einem Nephelometer der Firma Hach (Typ XR, nach US-Patent 4 198 161) in einer Küvette mit 22,2 mm Durchmesser in Analogie zu der für Wasser gebräuchlichen Norm DIN 38404, Teil 2. Gemessen wird die Intensität des Streulichtes im Vergleich zu einer Formazin-Standardlösung abzüglich des Wertes vom Lösungsmittel (ca. 0,3 NTU).

Die Messung der Farbwerte L und b erfolgte nach Hunter. Die Polyesterchips wurden zunächst im Trockenschrank bei 135 ± 5°C während einer Stunde kristallisiert. Die Farbwerte wurden danach ermittelt, indem in einem Dreibereichfarbmeßgerät der Farbton der Polyesterprobe mit drei Fotozellen, denen je ein Rot-, Grün- und Blaufilter vorgechaltet war, gemessen wurde (X-, Y- und Z-Werte). Die Auswertung erfolgte nach der Formel von Hunter, wobei

$$L = 10 \sqrt{Y}$$

und

$$b = \frac{7,0}{\sqrt{Y (Y - 0,8467 Z)}}$$

ist.

Der Acetaldehyd wurde durch Erhitzen in einem geschlossenen Gefäß aus Polyester ausgetrieben und der Acetaldehyd im Gasraum des Gefäßes gaschromatografisch durch Head space-Analyse bestimmt (Gaschromatograf mit FID und Head space-Injektionssystem HS4O, Perkin Elmer; Trägergas: Stickstoff; Säule: 1,5 m Edelstahl; Füllung: Poropack Q, 80-100 mesh; Probenmenge: 2 g; Heiztemperatur: 150°C; Heizdauer: 90 min.).

### 1. Ausführungsbeispiel mit Aktivkohle

Für die Herstellung der Katalysator-Suspension wurde als Trägersubstanz Aktivkohle BKP3 der Firma A.U. G. Neue Aktivkohle und Umweltschutz GmbH, Döberitz, DE, verwendet.

Angesetzt wurde eine 14 Ma-%ige Aktivkohlesuspension in Ethylenglykol, die anschließend in den Umlaufbehälter einer Perlmühle gefüllt wurde. Die Suspension wurde im Kreislauf mittels Schlauchpumpe mit einem Durchsatz von 180 - 300 kg/h durch die wassergekühlte Perlmühle über 90 min. transportiert. Anschließend wurde die Suspension mit Ethylenglykol auf etwa 8 Ma-% verdünnt, weitere 60 min. im Kreislauf gemahlen und anschließend in Behälter abgefüllt.

Die Korngrößenanalyse der glykolischen Suspension ergab folgende Werte, wobei die Messung der Korngrößenverteilung mit einem CAPA 700 Teilchenzählgerät (Dispergiermittel Methanol, Dichte 0,79 g/cm$^3$, Viskosität 0,55 cP, Dichte der Aktivkohle 1,90 g/cm$^3$, Zentrifugengeschwindigkeit 2000 Upm, Schichtdicke 10 mm erfolgte:

Mittlere Korngröße $d_{50}$ = 0,46 µm

| Korngröße [µm] | Kornanteil [Ma-%] |
|---|---|
| < 0,4 | 45 |
| 0,4 - 1 | 41 |
| 1 - 2 | 14 |

### 2. Ausführungsbeispiel mit Diatomeenerde

In gleicher Weise wie unter Beispiel 1 beschrieben, wurde eine Diatomeenerde des Typs MN 4 HT der Firma United Minerals behandelt. Es wurde eine mittlere Korngröße 0,49 µm erreicht.

| Korngröße [µm] | Kornanteil [Ma-%] |
|---|---|
| < 0,4 | 49 |

(fortgesetzt)

| Korngröße [µm] | Kornanteil [Ma-%] |
|---|---|
| 0,4 - 1 | 41 |
| 1 - 2 | 10 |

3. Ausführungsbeispiel mit Zeolith

In gleicher Weise wie in Beispiel 1 beschrieben, wurde ein Zeolith des Typs Wessalith P der Firma Degussa behandelt. Es wurde eine mittlere Korngröße 0,38 µm erreicht.

| Korngröße [µm] | Kornanteil [Ma-%] |
|---|---|
| < 0,4 | 55 |
| 0,4 - 1 | 40 |
| 1 - 2 | 5 |

**Zu 1. Ausführungsbeispiel**

Anschließend wurden jeweils 100,5 g der so vorbereiteten heeterogenen Phase (Trägermaterial für Metallkatalysatoren) des Trägers in einem 2 l Dreihalskolben mit 510 g Ethylenglykol und 60,7 g Essigsäure versetzt und unter schonendem Rühren 118,6 g Ti(IV)butylat p. A. oder Hersteller zugefügt, auf 85°C erwärmt und 4 Stunden unter Rückfluß gehalten. Anschließend wird diese Katalysatorsuspension bei 1000 Upm 10 min. zentrifugiert, der feste Anteil mit wasserfreiem Ethylenglykol gewaschen, nochmals unter gleichen Bedingungen zentrifugiert und anschließend eine 2 %-ige Suspension mit wasserfreiem Ethylenglykol eingestellt.
Ca. 50 % der Ti-Verbindung befinden sich nach dieser Prozedur im Trägermaterial, der Rest bleibt in der glykolischen Flüssigphase zurück, die nach Ausgleich der Ti-Konzentration als Vorlagematerial für den nächsten Katalysatoransatz verwendet werden kann.

**Zu 2. Ausführungsbeispiel**

Anstelle von Aktivkohle wurde die nach dem 2. Ausführungsbeispiel hergestellte Diatomeenerdesuspension als Träger verwendet, wobei die Prozedur der Herstellung wie in Beispiel 1 durchgeführt wurde.

**Zu 3. Ausführungsbeispiel**

Anstelle von Aktivkohle wurde die nach dem 3. Ausführungsbeispiel hergestellte Zeolithsuspension als Träger verwendet, wobei die Prozedur der Herstellung wie im 1. Ausführungsbeispiel durchgeführt wurde.

**Veresterungs- und Polykondensationsversuche**

Vergleichsbeispiele 2-4 und Beispiele 5-9

Ausgangsprodukt war ein vollkommen katalysatorfreies Veresterungsprodukt aus Terephthalsäure und Ethylenglykol mit folgenden analytischen Daten:

| I.V. | 0,20 dl/g |
|---|---|
| Vz | 565 mg KOH/g |
| Sz | 22 mg KOH/g |
| U | 96 % |
| freies EG | 0,12 Ma-% |
| DEG | 0,77 Ma-% |

Je 100 g des Veresterungsproduktes wurden zusammen mit Katalysator dem Katalysator aus dem Ausführungsbeispiel nach sorgfältiger Spülung des Reaktors mit Stickstoff, bei 275°C innerhalb von 50 min. unter Atmosphärendruck aufgeschmolzen. Danach wurde innerhalb von 50 min. der Druck allmählich auf 0,1 mbar gesenkt und die Temperatur auf 280°C angehoben und anschließend während 135 min. polykondensiert. Das mit Hilfe von flüssigem Stickstoff erstarrte Polykondensat wurde gemahlen und analysiert. Die Ergebnisse sind der Tabelle 2 zu entnehmen.

Tabelle 2:

| Beisp.Nr. | Katalysator | Katalysatormenge [ppm]** | I.V. [dl/g] | $\Delta$ I.V. [dl/g] *** | COOH [mmol/kg] | DEG [%] |
|---|---|---|---|---|---|---|
| 2 Vergleich | ohne | 0 | 0,357 | -- | 12 | 0,99 |
| 3 Vergleich | Sb | 200 | 0,630 | 0,273 | 8 | 0, 90 |
| 4 Vergleich | Ti* | 10 | 0,612 | 0,255 | 11 | 1,08 |
| 5 | Sb:Träger 1 14:1 | 50 | 0,538 | 0,181 | 10 | 1,01 |
| 6 | Ti:Träger 1 1:1 | 10 | 0,717 | 0,360 | 11 | 1,04 |
| 7 | Ti:Träger 1 1:1 | 3 | 0,620 | 0,263 | 10 | 1,00 |
| 8 | Ti:Träger 2 1:10 | 3 | 0,615 | 0,259 | 14 | 0,90 |
| 9 | Ti:Träger 3 1:10 | 3 | 0,64 | 0,283 | 11 | 0,91 |

*Ti = Titan(IV)butylat p.a. (von Aldrich Chemical Company, Inc., Milwaukee, USA) als glykolische Suspension

** bezogen auf Polyester, bei Antimontriacetat als Sb, bei dem neuen Katalysator nur auf Ti

*** Differenz zu Beispiel Nr. 2
Sb = Antimontriacetat (S 21 von Elf Atochem, Philadelphia, USA) als glykolische Suspension
Träger 1 = Aktivkohle BKP3, Oberfläche nach der BET-Methode 1100 $m^2$/g
Träger 2 = Diatomeenerde MN 4 HT, Oberfläche nach der BET-Methode 50 $m^2$/g
Träger 3 = Zeolith Wessalith P, Oberfläche nach der BET-Methode 900 $m^2$/g

**Vergleichsbeispiel Nr. 10 und Beispiele 11 - 12**

Herstellung von Polyethylenterephthalat, wie in den Beispielen Nr. 2 - 9 beschrieben, jedoch mit veränderten Einsatzmengen, wobei pro Ansatz 5000 g Veresterungsprodukt verwendet wurden. Zusätzlich zum Veresterungsprodukt wurden jeweils 2 Ma-% Isophthalsäure und 0,5 Ma-% Diethylenglykol zugesetzt. Die Polykondensation wird nach Erreichen einer Zielviskosität von 0,62 dl/g abgebrochen (Stromaufnahme Rührer ist Führungsgröße). Die Ergebnisse sind in Tabelle 3 zusammengestellt.

Tabelle 3

| Beisp.Nr | Zusätze | Kat.- Menge [ppm] | PK-Dauer [min] | I.V. [dl/g] | COOH [mmol/kg] | Farbe b |
|---|---|---|---|---|---|---|
| 10 Vergleich | Ti | 6 | 130 | 0,62 | 14 | 2,1 |
| | P | 6 | | | | |
| | B | 0,5 | | | | |
| 11 | Ti Ti:Träger 1 = 2:1 | 6 | 100 | 0,61 | 12 | 0,6 |
| | P | 5 | | | | |
| | B | 0,5 | | | | |
| 12 | Ti Ti:Träger 1 = 1:0,5 | 3 | 154 | 0,61 | 12 | 1,4 |
| | P | 40 | | | | |
| P: Zugabe als Phosphonopropionsäure von Clariant, DE, als 2 %-ige Lösung in Ethylenglykol | | | | | | |
| B: Bluetoner Cl solvent blue 104 von Clariant, F, als 0,04 - 0,05 %-ige glykolische Suspension | | | | | | |

**Vergleichsbeispiel Nr. 13 und Beispiele Nr. 14 - 15**

In einem mit ca. 30 % des Veresterungsproduktes der vorangehenden analogen Charge gefüllten Veresterungsreaktor wurden bei 260°C und Atmosphärendruck kontinuierlich 250 kg einer homogenen Paste aus Terephthalsäure und Ethylenglykol im Molverhältnis 1:1,1 sowie der Katalysator als glykolische Suspension und der Blautöner innerhalb von 80 min. eingespeist. Anschließend wurde unter Erhöhung der Temperatur auf 270°C 30 min. lang weiter verestert und kurz vor Abschluß der Veresterung der Stabilisator zugegeben. Während der gesamten Veresterung wurde das gebildete Reaktionswasser über eine Kolonne abgetrennt. Anschließend wurde der Reaktionsdruck innerhalb von 20 min. auf 10 mbar reduziert und das Reaktionsgemisch in einen Polykondensator überführt und bei 280 - 285°C und 2 - 3 mbar während der angegebenen PK-Dauer polykondensiert. Nach Erreichen der gewünschten I.V. wurde das Vakuum auf etwa 10 mbar eingestellt und die Polyesterschmelze mittels einer Zahnradpumpe einem Granulator zugeführt und granuliert. Die Ergebnisse sind in Tabelle 4 dargestellt.

Tabelle 4

| Beisp. Nr | Zusatzart. | Zusatzmenge [ppm] | PK- Dauer [min.] | I.V. [dl/g] | COOH [mmol/kg] | IPA/DEG [Ma-%] | Farbe L/b |
|---|---|---|---|---|---|---|---|
| 13 | Ti | 5 | 125 | 0,635 | 11 | 1,99/1,27 | 77/10 |
| | P | 11 | | | | | |
| | B | 1,5 | | | | | |
| 14 | Ti Ti:Träger 3:1 | 4,5 | 108 | 0,635 | 10 | 1,99/1,27 | 78/1,9 |
| | P | 11 | | | | | |
| | B | 1,5 | | | | | |
| 15 | Ti Ti:Träger 2:1 | 3 | 127 | 0,625 | 14 | 1,80/1,40 | 80/4,0 |
| | P | 21 | | | | | |
| | B | 0 | | | | | |
| P: Zugabe als Phosphonopropionsäure von Clariant, DE, als 2 %-ige Lösung in Ethylenglykol B: Bluetoner CI solvent blue 104 von Clariant, F, als 0,04 - 0,05 %-ige glykolische Suspension | | | | | | | |

Durch den Zusatz des erfindungsgemäßen Katalysators läßt sich die zur Herstellung einer vorgegebenen Polyesterqualität erforderliche Menge eines oder mehrerer üblicher Katalysatoren auf ein Niveau bis unter der Nachweisgrenze üblicher Analyseverfahren reduzieren, wobei die mechanischen, chemischen und thermischen Eigenschaften des Polyesters nicht beeinträchtigt werden. Die optischen Eigenschaften lassen sich in Abhängigkeit vom Trägermaterial kontrolliert einstellen.

**Patentansprüche**

1. Katalysator zur Herstellung linearer Polyester durch Umesterung oder Veresterung und Polykondensation mehrwertiger Alkohole mit mehrwertigen Carbonsäuren, **dadurch gekennzeichnet, daß** die die heterogene Phase bildende Trägersubstanz aus feinstkörnigen Teilchen poröser Struktur und großer innerer, reaktive und/oder koordinierte Zentren aufweisenden Oberfläche besteht, wobei in den Poren katalytisch wirksame Metallverbindung adsorbiert sind und wobei die nach der BET-Methode bestimmte spezifische Oberfläche der die Trägersubstanz bildenden Teilchen $\geq 50 m^2/g$ beträgt.

2. Katalysator nach Anspruch 1, **dadurch gekennzeichnet, daß** die die Trägersubstanz bildenden Teilchen aus wenigstens einer Substanz, ausgewählt aus Aktivkohle, Diatomeenerde, Zeolithen, synthetischen Silikaten, natürlichen Silikaten, Siliciumoxiden, Siliciumoxidhydraten, Fullerenen, und vernetzten Polymeren besteht.

3. Katalysator nach einem der Ansprüche 1 und 2, **dadurch gekennzeichnet, daß** die mittlere Korngröße $d_{50}$ der

Teilchen 0,05 bis 2,0 pm, vorzugsweise 0,1 bis 2,0 µm, insbesondere 0,2 bis 0, 5 µm, beträgt.

4. Katalysator nach einem der Ansprüche 1 bis 3, **dadurch gekennzeichnet, daß** die nach der BET-Methode bestimmte spezifische Oberfläche der die Trägersubstanz bildenden Teilchen > 500 m$^2$/g beträgt.

5. Katalysator nach einem der Ansprüche 1 bis 4, **dadurch gekennzeichnet, daß** die katalytisch wirksame Komponente aus wenigstens einer der Metallverbindungen des Ti, Sb, Ge, Sn und Al besteht, die das Metall in Form seiner Ionen Ti$^{4+}$, Sb$^{3+}$, Ge$^{4+}$, Sn$^{4+}$ und Al$^{3+}$ bei der Reaktion mit den OH- bzw. COOH-Endgruppen der Polyestermasse zur Verfügung stellen.

6. Katalysator nach einem der Ansprüche 1 bis 5, **dadurch gekennzeichnet, daß** das Massenverhältnis von Trägersubstanz zum Metall der katalytisch wirksamen Metallverbindung 1:50 bis 50:1, vorzugsweise 1:2 bis 20:1, beträgt.

7. Verfahren zur Herstellung des Katalysators zur Herstellung von linearen Polyestern durch Umesterung oder Veresterung und Polykondensation mehrwertiger Alkohole mit mehrwertigen Carbonsäuren, wobei die die heterogene Phase bildende Trägersubstanz aus feinstkörnigen Teilchen poröser Struktur und großer innerer, reaktive und/ oder koordinative Zentren aufweisende Oberfläche besteht und in den Poren katalytisch wirksame Metallverbindung adsorbiert ist und wobei die nach der BET-Methode bestimmte spezifische Oberfläche der die Trägersubstanz bildenden Teilchen ≥ 50m$^2$/g beträgt, **dadurch gekennzeichnet, daß** die Trägersubstanz und die katalytisch wirksame Metallverbindung in wasserfreier Flüssigkeit, vorzugsweise in dem für die Polyesterherstellung vorgesehenen mehrwertigen Alkohol, insbesondere Diol, homogen suspendiert werden.

8. Verfahren nach Anspruch 7, **dadurch gekennzeichnet, daß** die Reaktion zwischen Trägersubstanz und katalytisch wirksamer Metallverbindung bei erhöhter Temperatur durchgeführt wird.

9. Verfahren nach einem der Ansprüche 7 und 8, **dadurch gekennzeichnet, daß** von der erhaltenen Reaktionssuspension die Flüssigkeit mit der gegebenenfalls nicht umgesetzten katalytisch wirksamen Metallverbindung mechanisch abgetrennt und gegebenenfalls gewaschen wird.

10. Verfahren nach einem der Ansprüche 7 bis 9, **dadurch gekennzeichnet, daß** die Trägersubstanz gemahlen wird.

11. Verfahren nach einem der Ansprüche 7 bis 9, **dadurch gekennzeichnet, daß** die die Trägersubstanz enthaltende Suspension gemahlen wird.

12. Verfahren nach einem der Ansprüche 7 bis 11, **dadurch gekennzeichnet, daß** die Suspension nach Abschluß der Reaktion zwischen Trägersubstanz und Metallverbindung gemahlen wird.

13. Verfahren zur Herstellung von linearen Polyestern durch Umesterung oder Veresterung und Polykondensation mehrwertiger Alkohole mit basischen Carbonsäuren unter Verwendung eines Katalysators, bestehend aus einer die heterogene Phase bildende Trägersubstanz aus feinstkörnigen Teilchen poröser Struktur und großer innerer reaktive und/oder koordinative Zentren aufweisende Oberfläche und in den Poren adsorbierter katalytisch wirksamer Metallverbindung, **dadurch gekennzeichnet, daß** die für die Reaktion erforderliche Katalysatormenge, bezogen auf seinen Metallgehalt des Katalysators, mit Bezug auf Polymer 0,1 bis 100 ppm beträgt.

14. Verfahren nach Anspruch 13, **dadurch gekennzeichnet, daß** der Katalysator während des Zeitraums von vor Beginn der Veresterung bis kurz vor Ende der Polykondensation zugesetzt wird.

15. Verfahren nach einem der Ansprüche 13 und 14, **dadurch gekennzeichnet, daß** bei Herstellung von Polyester nach dem Verfahren der Umesterung der Katalysator erst nach der Blockierung der Umesterungskatalysatoren zugesetzt wird.

16. Verfahren nach einem der Ansprüche 13 bis 15, **dadurch gekennzeichnet, daß** der Zeitpunkt für den Zusatz eines Phosphor-Stabilisators in einer Menge von 1 bis 50 ppm, vorzugsweise 1 bis 10 ppm Phosphor, bezogen auf die Polyestermasse, von dem Zeitpunkt der Zugabe des Katalysators verschieden ist und von diesem, bezogen auf den Verlauf der Polyesterherstellung, zeitlich möglichst entfernt liegt.

17. Verfahren nach einem der Ansprüche 13 bis 16, **dadurch gekennzeichnet, daß** polyfunktionelle Alkohole, wie Trioder Tetrahydroxyalkane, polyfunktionelle Carbonsäuren und Phosphonsäureverbindungen mit einer Konzentration von bis zu 300 ppm, bezogen auf Polyester, zugesetzt werden.

18. Verfahren nach einem der Ansprüche 13 bis 17, **dadurch gekennzeichnet, daß** ein schwermetallfreier Blautöner in einer Menge von bis zu 3 ppm zugesetzt wird.

19. Verwendung der nach einem der Ansprüche 13 bis 18 hergestellten linearen Polyester für Flaschen, Folien und sonstige Lebensmittelverpackungen, sowie zur Herstellung von Fasern, Filamenten und Formkörpern.

**Claims**

1. Catalyst for preparing linear polyesters via transesterification or esterification and polycondensation of polyhydric alcohols with polybasic carboxylic acids, **characterized in that** the carrier substance forming the heterogeneous phase is composed of very fine-grain particles which have a porous structure and have a large interior surface comprising reactive and/or coordinated centres, where catalytically active metal compound have been adsorbed within the pores and where the specific surface area determined by the BET method of the particles forming the carrier substance is $\geq 50$ m$^2$/g.

2. Catalyst according to Claim 1, **characterized in that** the particles forming the carrier substance is composed of at least one substance selected from activated charcoal, diatomaceous earth, zeolites, synthetic silicates, natural silicates, silicon oxides, silicon oxide hydrates, fullerenes, and crosslinked polymers.

3. Catalyst according to Claim 1 or 2, **characterized in that** the median grain size $d_{50}$ of the particles is from 0.05 to 2.0 μm, preferably from 0.1 to 2.0 μm, in particular from 0.2 to 0.5 μm.

4. Catalyst according to any of Claims 1 to 3,
**characterized in that** the specific surface area determined by the BET method of the particles forming the carrier substance is > 500 m$^2$/g.

5. Catalyst according to any of Claims 1 to 4,
**characterized in that** the catalytically active component is composed of at least one of the metal compounds of Ti, Sb, Ge, Sn and Al, which make the metal available in the form of its ions Ti$^{4+}$, Sb$^{3+}$, Ge$^{4+}$, Sn$^{4+}$ and Al$^{3+}$ during the reaction with the OH or COOH end groups of the polyester composition.

6. Catalyst according to any of Claims 1 to 5,
**characterized in that** the ratio by weight of carrier substance to the metal of the catalytically active metal compound is from 1:50 to 50:1, preferably from 1:2 to 20:1.

7. Process for preparing the catalyst for preparing linear polyesters via transesterification or esterification and polycondensation of polyhydric alcohols with polybasic carboxylic acids, where the carrier substance forming the heterogeneous phase is composed of very fine-grain particles which have a porous structure and have a large interior surface comprising reactive and/or coordinated centres, where catalytically active metal compound has been adsorbed within the pores and where the specific surface area determined by the BET method of the particles forming the carrier substance is $\geq 50$ m$^2$/g, **characterized in that** the carrier substance and the catalytically active metal compound are homogeneously suspended in an anhydrous liquid, preferably in the polyhydric alcohol, in particular diol, intended for the polyester preparation process.

8. Process according to Claim 7, **characterized in that** the reaction between carrier substance and catalytically active metal compound is carried out at an elevated temperature.

9. Process according to Claim 7 or 8, **characterized in that** the liquid with the, where appropriate, unreacted catalytically catalytically active metal compound is separated off mechanically and, where appropriate, is washed.

10. Process according to any of Claims 7 to 9, **characterized in that** the carrier substance is milled.

11. Process according to any of Claims 7 to 9, **characterized in that** the suspension comprising the carrier substance is milled.

**12.** Process according to any of Claims 7 to 11, **characterized in that** the suspension is milled after conclusion of the reaction between carrier substance and metal compound.

**13.** Process for preparing linear polyesters via transesterification or esterification and polycondensation of polyhydric alcohols with basic carboxylic acids using a catalyst composed of a carrier substance which forms the heterogeneous phase and is composed of very fine-grain particles which have a porous structure and which have a large internal surface comprising reactive and/or coordinated centres, and of catalytically active metal compound adsorbed within the pores, **characterized in that** the amount of catalyst required for the reaction, based on its metal content of the catalyst, based on polymer is from 0.1 to 100 ppm.

**14.** Process according to Claim 13, **characterized in that** the catalyst is added during the period from prior to the start of the esterification to shortly prior to the end of the polycondensation.

**15.** Process according to Claim 13 or 14, **characterized in that**, during preparation of polyester by the process of transesterification, the catalyst is added only after the blocking of the transesterification catalysts.

**16.** Process according to any of Claims 13 to 15, **characterized in that** the juncture of addition of a phosphorus stabilizer, in an amount of from 1 to 50 ppm, preferably from 1 to 10 ppm, of phosphorus, based on the polyester composition, differs from the juncture of addition of the catalyst and has maximum chronological separation therefrom, based on the progress of the polyester preparation process.

**17.** Process according to any of Claims 13 to 16, **characterized in that** polyfunctional alcohols, e.g. tri- or tetrahydroxyalkanes, polyfunctional carboxylic acids and phosphonic acid compounds with a concentration of up to 300 ppm, based on polyester, are added.

**18.** Process according to any of Claims 13 to 17, **characterized in that** an amount of up to 3 ppm of a heavy-metal-free blueing agent is added.

**19.** Use of the linear polyesters prepared according to Claims 13 to 18 for bottles, films and other packaging for food or drink, or else for the production of fibres, filaments and mouldings.

**Revendications**

**1.** Catalyseur pour la préparation de polyesters linéaires par transestérification ou estérification et polycondensation d'alcools polyvalents avec des acides carboxyliques polyvalents, **caractérisé en ce que** la substance support formant la phase hétérogène est constituée par des particules très finement divisées de structure poreuse et une surface interne grande, réactive et/ou présentant des centres de coordination, les composés métalliques catalytiquement actifs étant adsorbés dans les pores et la surface spécifique des particules formant la substance support, déterminée par le procédé BET, étant $\geq$ 50 m$^2$/g.

**2.** Catalyseur selon la revendication 1, **caractérisé en ce que** les particules formant la substance support sont constituées par au moins une substance choisie parmi le charbon actif, les terres de diatomées, les zéolithes, les silicates synthétiques, les silicates naturels, les oxydes de silicium, les oxydes de silicium hydratés, les fullerènes et les polymères réticulés.

**3.** Catalyseur selon l'une quelconque des revendications 1 et 2, **caractérisé en ce que** la grosseur moyenne d$_{50}$ des particules est de 0,05 à 2,0 $\mu$m, de préférence de 0,1 à 2,0 $\mu$m, en particulier de 0,2 à 0,5 $\mu$m.

**4.** Catalyseur selon l'une quelconque des revendications 1 à 3, **caractérisé en ce que** la surface spécifique des particules formant la substance support, déterminée selon le procédé BET est > 500 m$^2$/g.

**5.** Catalyseur selon l'une quelconque des revendications 1 à 4, **caractérisé en ce que** le composant catalytiquement actif est constitué par au moins un des composés métalliques du Ti, Sb, Ge, Sn et Al qui mettent à disposition le métal sous forme de ses ions Ti$^{4+}$, Sb$^{3+}$, Ge$^{4+}$, Sn$^{4+}$ et Al$^{3+}$ lors de la réaction avec les groupes terminaux OH ou COOH de la masse de polyester.

**6.** Catalyseur selon l'une quelconque des revendications 1 à 5, **caractérisé en ce que** le rapport massique de la substance support au métal du composé métallique catalytiquement actif est de 1:50 à 50:1, de préférence de 1: 2 à 20:1.

**7.** Procédé pour la préparation du catalyseur pour la préparation de polyesters linéaires par transestérification ou estérification et polycondensation d'alcools polyvalents avec des acides carboxyliques polyvalents, la substance support formant la phase hétérogène étant constituée par des particules très finement divisées de structure poreuse et une surface interne grande, réactive et/ou présentant des centres de coordination et un composé métallique catalytiquement actif étant adsorbé dans les pores, la surface spécifique des particules formant la substance support déterminée selon le procédé BET étant $\geq$ 50 m$^2$/g, **caractérisé en ce que** la substance support et le composé métallique catalytiquement actif sont mis en suspension de manière homogène dans un liquide anhydre, de préférence dans l'alcool polyvalent, en particulier le diol, prévu pour la préparation du polyester.

**8.** Procédé selon la revendication 7, **caractérisé en ce que** la réaction entre la substance support et le composé métallique catalytiquement actif est réalisé à température élevée.

**9.** Procédé selon l'une quelconque des revendications 7 et 8, **caractérisé en ce qu'**on sépare mécaniquement et le cas échéant lave le liquide de la suspension de réaction obtenue, avec le composé métallique catalytiquement actif le cas échéant non transformé.

**10.** Procédé selon l'une quelconque des revendications 7 à 9, **caractérisé en ce que** la substance support est broyée.

**11.** Procédé selon l'une quelconque des revendications 7 à 9, **caractérisé en ce que** la suspension contenant la substance support est broyée.

**12.** Procédé selon l'une quelconque des revendications 7 à 11, **caractérisé en ce que** la suspension est broyée après la réaction entre la substance support et le composé métallique.

**13.** Procédé pour la préparation de polyesters linéaires par transestérification ou estérification et polycondensation d'alcools polyvalents avec des acides carboxyliques basiques en utilisant un catalyseur, constitué par une substance support formant la phase hétérogène constituée par des particules finement divisées de structure poreuse et une surface interne grande, réactive et/ou présentant des centres de coordination et un composé métallique catalytiquement actif adsorbé dans les pores, **caractérisé en ce que** la quantité de catalyseur nécessaire pour la réaction, par rapport à la teneur en métal du catalyseur, en se rapportant au polymère, est de 0,1 à 100 ppm.

**14.** Procédé selon la revendication 13, **caractérisé en ce que** le catalyseur est ajouté pendant le laps de temps allant d'avant le début de l'estérification jusqu'à peu avant la fin de la polycondensation.

**15.** Procédé selon l'une quelconque des revendications 13 et 14, **caractérisé en ce que** lors de la préparation de polyesters selon le procédé de la transestérification, le catalyseur n'est ajouté qu'après le blocage des catalyseurs de transestérification.

**16.** Procédé selon l'une quelconque des revendications 13 à 15, **caractérisé en ce que** le moment de l'addition d'un stabilisant du phosphore en une quantité de 1 à 50 ppm, de préférence de 1 à 10 ppm de phosphore, par rapport à la masse de polyester, est différent du moment de l'addition du catalyseur et est le plus éloigné possible de celui-ci dans le temps par rapport au déroulement de la préparation du polyester.

**17.** Procédé selon l'une quelconque des revendications 13 à 16, **caractérisé en ce qu'**on ajoute des alcools polyfonctionnels, tels que les trihydroxyalcanes ou les tétrahydroxyalcanes, des acides carboxyliques polyfonctionnels et des composés de l'acide phosphonique en une concentration allant jusqu'à 300 ppm par rapport au polyester.

**18.** Procédé selon l'une quelconque des revendications 13 à 17, **caractérisé en ce qu'**on ajoute un colorant bleu exempt de métaux lourds en une quantité allant jusqu'à 3 ppm.

**19.** Utilisation des polyesters linéaires préparés selon l'une quelconque des revendications 13 à 18 pour des bouteilles, des feuilles et d'autres emballages alimentaires ainsi que pour la fabrication de fibres, filaments et corps façonnés.